# EUROPEAN PATENT APPLICATION

(11) **EP 2 107 100 A1**
(43) Date of publication of application: **07.10.2009**
(21) Application number: 08153227.7
(22) Date of filing: 25.03.2008
(51) Int. Cl.: C10G 1/00, C10G 1/08

(54) **Multi-stage biocatalytic cracking process**

(71) Applicant: KiOR Inc., 3871 KM Hoevelaken (NL)
(72) Inventor: O'Connor, Paul, 3871 KM, Hoevelaken (NL)
(74) Representative: Rasser, Jacobus Cornelis

(57) **Abstract**

Disclosed is a two-stage process for the catalytic conversion of a biomass feedstock. Upon establishing an intimate contact of the biomass feedstock with an inorganic catalyst material, the biomass-catalyst mixture is subjected to a first biocatalytic cracking reaction in a first biocatalytic cracking unit.

Condensable product from the first biocatalytic cracking unit is separated from unconverted biomass material. Unconverted biomass material is subjected to a second biocatalytic cracking reaction in a second catalytic cracking unit. In general, the reaction conditions in the second cracking unit are more severe than in the first.

In a specific embodiment the biomass feedstock comprises at least 10 wt% triglycerides.

## Description

### BACKGROUND OF THE INVENTION

### 1. Field of the Invention

The invention relates generally to a two-stage process for catalytic cracking of biomass, and more particularly to a two-stage process for the catalytic cracking of biomass material comprising significant amounts of triglycerides.

### 2. Description of the Related Art

EP 07110949.0 discloses a two-stage process for converting biomass wherein the first stage is a hydrotreatment step and the second stage is a pyrolysis step. In a preferred embodiment the first stage is carried out in a filter press. Although the process provides a high yield of good quality liquid products, it fails to provide the throughput and efficiency of the traditional FCC process as it is used in the refining of mineral crude fractions.

Thus, there is a particular need for a process for converting biomass to liquid fuel products and precursors to such liquid fuel products

### BRIEF SUMMARY OF THE INVENTION

The present invention addresses these problems by providing a two-stage biocatalytic cracking (BCC) process wherein the first stage is conducted under milder conditions than the second stage.

Another aspect of the invention comprises using the two-stage process for the cracking of a biomass feedstock comprising significant amounts of triglycerides.

### DESCRIPTION OF ILLUSTRATIVE EMBODIMENTS

The following is a description of certain embodiments of the invention, given by way of example only.

An important part of the refining process of mineral crude oil is the fluid catalytic cracking (FCC) of crude oil or a heavy fraction of crude oil, such as vacuum gas oil (VGO). In the FCC process droplets of the oil feedstock are combined with small particles of a cracking catalyst in a fluidized bed. Most FCC units employ a riser, although some use a downer. The main products of the FCC process are liquid hydrocarbons in a molecular weight range suitable for liquid fuels such as gasoline and diesel fuel; gaseous products such as methane and light olefins; and coke or char.

The coke or char deposits itself onto the catalyst particles, thereby deactivating the catalyst. The catalyst is separated from the reaction products in a stripper, and regenerated in a regenerator. Regeneration involves the burning of the coke or char. The heat generated by this process is introduced into the FCC process in the form of hot catalyst particles into the riser or downer. FCC catalysts typically comprise an acidic catalyst, such as zeolites ZSM-5; and a matrix material typically comprising a clay and alumina. Additives may be used to fine-tune the selectivity of the cracking reaction, for example to increase the olefin yield, to decrease the coke yield, etc.

It would be desirable to use the FCC process for converting biomass to liquid products, as the FCC process is well understood and lends itself well for a variety of feedstocks. In practice, however, there are many obstacles to the use of the FCC process for biomass feedstocks. Firstly, the more abundantly available biomass feedstocks are solids. The contact time of catalyst and feedstock in an FCC riser (on the order of seconds) is believed to be too short to cause much, if any, catalytic conversion of the biomass feedstock. Any conversion that does take place would be thermal conversion rather than catalytic conversion.

A second hurdle is the high oxygen content of most biomass feedstocks, in particular feedstocks containing large amounts of (ligno-)cellulose. Liquid conversion products of such feedstocks, often referred to as bio-oils, tend to have a low pH, a high total acidity number ("TAN" defined as the amount of base, expressed as mg KOH, necessary to neutralize 1 g of the bio-oil), and to be corrosive and unstable.

A third hurdle is that biomass feedstock has a high coke yield in an FCC process. As explained above, some coke yield is in fact desirable, as the heat energy generated in burning off the coke can be used in the endothermic cracking reaction. Ideally the coke yield should be such that the heat generated in the catalyst regenerator can all be used in the riser. For most FCC units this equilibrium coke yield is about 5%. In an integrated refinery, excess heat from higher coke yields can be used in other endothermic processes, such as hydrotreatment. In general, however, high coke yields are undesirable, as they represent a loss of valuable feedstock.

It has now been discovered that the above problems can be mitigated or avoided by subjecting the biomass to a two-stage biocatalytic cracking process. In the first stage a biomass feedstock mixed with a particulate inorganic material is subjected to a mild biocatalytic cracking step. Liquid and gaseous products produced in this first stage are separated from the stream of solids (containing catalyst particles and unconverted biomass feedstock). The stream of solids is then subjected to a second stage biocatalytic cracking. The reaction conditions in this second stage are more severe.

There are several advantages to this two-stage process. The conversion products of the first stage are not subjected to the more severe conditions of the second stage, so that less coke or char is formed. The more severe conditions of the second stage increase the overall yield of the process. Other advantages will become clear in the more detailed discussion that follows.

Another important advantage of this two-stage process is that it lends itself to being conducted continuously.

The catalytic material used in the process of the invention may be a particulate inorganic material. Examples include salts, oxides and hydroxides of alkali metal and earth alkaline elements; clays, such as anionic and cationic clays; inorganic oxides such as alumina, silica, zirconia, titania, and the like; mixed oxides and hydroxides, such as layered hydroxides and hydrotalcites. Preferred for use herein are alkali metal salts, in particular the carbonates of sodium and potassium, and the hydrotalcites. Mixtures of alkali metal salts and a hydrotalcite are particularly preferred.

It will be understood that hydrotalcites may convert to mixed metal oxides and/or mixed metal carbonates under the reaction conditions of the process. The term "hydrotalcite" as used herein encompasses such mixed metal oxides and mixed metal carbonates.

In an alternate embodiment the catalytic material used in the process of the invention is a solution of an inorganic hydroxide or salt. Suitable inorganic hydroxides and salts include the hydroxides and salts of the alkali and earth alkaline metals. Preferred for use herein are the hydroxides and carbonates of Na and K.

In yet another embodiment the catalytic material used in the process of the invention is a combination of a particulate inorganic material and a solution of an inorganic hydroxide or salt.

The biomass feedstock may be any renewable energy carrier. Preferred for use herein are feedstocks that cannot be readily used as food stuffs. More preferred are biomass feedstocks that are produced as waste products in the manufacture of products such as agricultural or forestry commodities. Suitable examples include ligno-cellulosic biomass feedstocks, such as wood chips, saw dust, straw, grasses, bagasse, corn husks, and the like.

Particularly suitable are biomass feedstocks that contain significant amounts, i.e., more than 10 wt%, preferably more than 20 wt%, of a triglyceride or mixture of triglycerides. Examples include certain algae, rapeseed, copra, and the like.

If a particulate inorganic material is used as the catalytic material, it is important to establish an intimate contact between the biomass feedstock and the particulate inorganic catalyst. Methods of establishing such an intimate contact are disclosed in WO 2007/128799, the disclosures of which are incorporated herein by reference.

Intimate contact between the biomass feedstock may be established by impinging the biomass feedstock with a gas stream in which the particulate inorganic material is entrained. This may be carried out in the reactor used for the first stage biocatalytic cracking, or in a mixing reactor just prior to the first-stage reactor.

Other preferred methods of establishing intimate contact between the biomass feedstock and the particulate inorganic material include mechanical treatments such as milling, grinding, kneading, and the like. It will be understood that such treatment can be combined with a reduction of the particle size of the biomass feedstock.

If a solution of an inorganic hydroxide or salt is used as the catalytic material, intimate contact of the catalytic material with the biomass feedstock may be established by techniques such as impregnation or spray-on.

Of particular interest is the use of poultry manure as a catalytic material in the process of the invention. Poultry manure is a good source of catalytically active inorganic material, such as K₂O. In general, poultry manure is available as a waste product of poultry farms, in most cases mixed with a material that was used as a litter material at the poultry farm. Litter materials themselves are biomass materials, such as sawdust or peanut shells. The biomass component of the poultry manure is converted in the process of the invention.

For use in this process the biomass feedstock must have a particle size suitable for the fluid bed reactions. As the density of the biomass feedstock is generally significantly lower than that of the particulate inorganic material, the upper of the particle size of the biomass feedstock is much greater, and not particularly critical. Particle sizes up to about 10 mm are suitable. Very small particles have a very short residence time in the reactor, but are also more reactive. In general, particle sizes in the range of 100 micrometer to 10 millimeter are suitable.

If required, the biomass feedstock is subjected to a particle size reduction step prior to the two-stage BCC process. Methods for reducing the particle size of biomass materials are well known in the art. Suitable examples include chipping, milling, grinding, and kneading. As mentioned above, it may be advantageous to combine the particle size reduction step with the step of establishing intimate contact between the biomass feedstock and the particulate inorganic material.

It may be desirable to subject the biomass feedstock to a pre-treatment step, prior two the first-stage BCC step. The pretreatment step may be carried out in a riser. The pre-treatment step is carried out at a temperature below 150 °C, preferably below 120 °C. At these low temperatures air may be used as a lift gas in the riser, without causing combustion of the biomass material. Another suitable lift gas for use in this pre-treatment step is dry steam.

The reactors used for the first-stage and second-stage BCC steps may be conventional FCC risers. Importantly, the process can be operated such that the liquid products produced have a TAN of less than 10, and a pH (measured after a 20-times dilution) of greater than 3.5. Accordingly, the construction materials used in conventional refinery equipment (stainless steel and/or carbon steel) will not be excessively corroded by the reaction products of the process.

The cracking conditions in the first-stage BCC reactor are relatively mild. The temperature is in the range of 150 to 350 °C, preferably from 200 to 300 °C. The contact time is kept relatively short, in the range of 1 to 10 seconds. Preferably the cracking reaction is carried out in an inert or reducing atmosphere. Steam can be considered inert, or even slightly reducing, under the conditions prevalent in the BCC reactor. The reductive properties of the gas atmosphere in the reactor may be increased further by adding reducing gases such as methane, carbon monoxide, and hydrogen. Methane is a gaseous by-product of the cracking reaction, and therefore readily available. Carbon monoxide is produced in the catalyst regenerator and therefore also readily available. Hydrogen, although highly effective as a reducing agent, is expensive and therefore not preferred.

It has been discovered that reducing properties may be imparted to the BCC reactor by blending in catalyst particles containing a residual coke deposit. For example, the regenerator may be operated in a fashion such that the regenerated catalyst particles contain a residual amount of coke, for example 1 or 2 wt%. A portion of this catalyst stream may be introduced at the bottom of the riser of the first-stage BCC. The coke present on the catalyst particles acts as a reducing agent in the reactor.

Leaving the first riser at the top is a mixture of gaseous reaction products, condensable reaction products, catalyst particles, and solid biomass. The gaseous products may be used for heating purposes, or may be separated to recover reducing gases to be used for recycle to the bottom of the riser.

Condensable reaction products can be considered a bio-oil, with the proviso that the quality is better than that of bio-oils obtained with more traditional processes, such as pyrolysis. Upon condensation the bio-oils are collected as a feedstock for the production of platform chemicals, or for upgrading to liquid fuels suitable for use in internal combustion engines.

Solid biomass entering the second-stage BCC reactor comprises both unconverted biomass and partially converted biomass. It is recovered from the first riser as a mixture with the particulate catalyst particles. The mixture may be sent to the second riser as-is. However, it is preferable to separate the biomass particles from the catalyst particles, which is readily accomplished in, for example, a cyclone, as the two materials have densities that are considerably different.

Catalyst particles are sent to a stripper for removal of adhered condensable reaction products. The catalyst particles are then transferred to a regenerator for removal of coke deposits. Coke removal is accomplished by exposing the catalyst particles to an oxygen-containing gas at increased temperature, in a process well known from the refinery art. As discussed above, it may be desirable to conduct an incomplete coke burn-off, so as to obtain catalyst particles with a small amount of residual coke.

The flue gas of the regenerator comprises carbon dioxide and carbon monoxide. The carbon monoxide may be collected for use as a reducing gas, as discussed above. The carbon dioxide may be collected for disposal in, for example, underground storage. Carbon dioxide may also be used in the generation of biomass, for example in the production of aquatic biomass such as algae.

Unconverted biomass is introduced at the bottom of the second riser. If no separation was conducted after the first stage BCC the biomass feedstock is still mixed with catalyst particles. However, these catalyst particles are partially inactivated due to coke deposits, making it desirable, or even necessary, to add fresh catalyst.

The second riser is operated under more severe conditions than the first. The temperature is in the range of 350 to 600 °C, preferably 450 to 550 °C; the contact time is preferably in the range of 10 to 25 seconds. Operating conditions may be varied to increase or decrease the conversion, increase or decrease the coke yield, etc., in ways well known from the operation of refinery FCC units.

Product recovery and catalyst regeneration proceeds as described above for materials leaving the first riser.

Inorganic materials present in the biomass material, to be referred to herein as ash, may be recovered form the second biocatalytic cracking unit. The ash itself is a valuable source of catalytic inorganic material, in particular K and Na. It is desirable to recycle part of the ash to the process, in particular to the first biocatalytic cracking unit. Ash may be slurried in water and sprayed onto the biomass feedstock.

It will be understood that the two-stage BCC process provides the operator with a high level of operating flexibility. For example, overall conversion may be increased by operating the first riser under more severe conditions, possibly at the expense of a higher coke yield. The use of fresh catalyst in the second riser increases the conversion, but requires a catalyst/biomass separation step after the first riser. The product quality may be improved by the introduction of reducing gases into one or both of the risers, but requires the separation of reducing gases from the respective product streams and/or the use of expensive hydrogen. Thus, the process offers many optimization opportunities to meet specific economic and quality needs.

The invention will be further illustrated with a description of an embodiment whereby the feedstock is a biomass material comprising more than 10 wt%, preferably more than 30 wt%, triglycerides. Examples of such feedstocks include algae, palm, rape seeds, sunflower seeds, and jathropa.

Genetically modified energy crops are being developed that produce liquid hydrocarbons, such as pentane, hexane, and the like. Biomass from these energy crops are particularly suitable as feedstock for the process of the invention.

Genetically modified energy crops are being developed that produce alcohols, such as ethanol, propanol, butanol, and the like. Biomass from these energy crops are particularly suitable as feedstock for the process of the invention.

The first stage BCC produces a bio-oil which, in this case, comprises significant amounts of triglycerides and fatty acid esters. The bio-oil is separated from the reaction product of the first stage BCC. The bio-oil may be converted to a diesel fuel, for example by hydrothermal treatment, by hydrocracking, by transesterification, or a combination of these upgrading processes.

The condensable reaction product of the second stage will be referred to as bio-crude. This bio-crude may be upgraded in a traditional refinery, for example after blending with the heavier fractions of a mineral crude, such as vacuum gas oil, or resid.

The bio-crude preferably is split into a first bio-crude fraction and a second bio-crude fraction, for example by distillation, or phase separation. The first bio-crude fraction is the higher-boiling fraction. This fraction may be subjected to a reforming step to form a third bio-crude fraction. This third bio-crude fraction may be mixed with the second bio-crude fraction to form a fourth bio-crude fraction.

The fourth bio-crude fraction may be subjected to a hydrocracking step to form a light diesel fuel.

As described above, CO₂ produced during the first stage BCC and/or the second stage BCC may be collected for use, for example, in growing biomass.

## Claims

1. A two-stage catalytic process for converting a biomass feedstock, said process comprising:
a) establishing an intimate contact of the biomass feedstock in particulate form with an inorganic catalyst material;
b) subjecting the mixture of biomass feedstock and catalyst material to a biocatalytic cracking reaction in a first biocatalytic cracking unit to form a condensable product and a solid biomass material;
c) separating the condensable product from the solid biomass material;
d) subjecting the solid biomass material from step c) to a second biocatalytic cracking reaction in a second biocatalytic cracking unit.

2. The process of claim 1 which is a continuous process.

3. The process of claim 1 or 2 wherein the inorganic catalyst material is a solution of an inorganic hydroxide or salt.

4. The process of claim 1 or 2 wherein the inorganic catalyst material is a particulate inorganic material.

5. The process of claim 1 or 2 wherein the inorganic catalyst material is a combination of a solution of an inorganic hydroxide or salt and a particulate inorganic material.

6. The process of claim 1 or 2 wherein the inorganic catalyst material is present in poultry manure.

7. The process of any one of the preceding claims wherein the biomass feedstock comprises (ligno-) cellulose.

8. The process of claim 4 or 5 wherein the particulate catalyst material is selected from salts, oxides and hydroxides of alkali metal and earth alkaline elements; clays, such as anionic and cationic clays; inorganic oxides such as alumina, silica, zirconia, titania, and the like; mixed oxides and hydroxides, such as layered hydroxides and hydrotalcites, and mixed metal oxides and mixed metal carbonates derived therefrom; and mixtures thereof.

9. The process of any one of the preceding claims wherein step a) comprises milling, grinding or kneading the biomass feedstock in the presence of the particulate catalyst material.

10. The process of any one of the preceding claims wherein the particulate catalyst material comprises an alkali metal salt and/or a hydrotalcite.

11. The process of any one of the preceding claims wherein step b) is carried out at a temperature in the range of from 150 to 350°C, preferably from 150 to 250 °C.

12. The process of any one of the preceding claims wherein step b) is carried out with a contact time in the range of 10 to 300 seconds, preferably from 10 to 100 seconds.

13. The process of any one of the preceding claims wherein step b) and/or step d) is carried out in the presence of a reducing gas.

14. The process of claim 13 further comprising a catalyst regeneration step, said catalyst regeneration step producing CO, said CO being used at least in part as the reducing gas.

15. The process of any one of the preceding claims wherein catalyst is separated from the reaction product of step b) and regenerated in a regenerator.

16. The process of claim 15 wherein regenerated catalyst is recycled to the first biocatalytic cracking unit.

17. The process of claim 16 wherein the regenerated catalyst comprises at least 1 wt% residual coke.

18. The process of any one of the preceding claims, further comprising the step of recovering ash from the product of the second biocatalytic cracking unit.

19. The process of claim 18 wherein at least part of the ash is recycled to at least the first biocatalytic cracking unit.

20. The process of claim 19 wherein the recycled ash is in the form of an aqueous slurry.

21. A process for converting a biomass material comprising at least 10 wt% triglycerides, said process comprising a first stage biocatalytic cracking (BCC) step and a second stage biocatalytic cracking (BCC) step.

22. A process according to claim 21 wherein the biomass material is of aquatic origin.

23. A process according to claim 21 or 22 wherein the biomass material comprises at least 30% triglycerides.

24. A process according to any one of claims 1 through 20 wherein the biomass material comprises more than 10% of a liquid hydrocarbon material.

25. A process according to any one of claims 1 through 20 wherein the biomass material comprises more than 10% of an alcohol.

26. The process of any one of claims 22 through 24 wherein the first stage BCC step produces a reaction product comprising a bio-oil and a lignocellulosic phase, and whereby the lignocellulosic phase is subjected to the second stage BCC after the bio-oil has been separated from the reaction product.

27. The process of claim 26 wherein the second stage BCC produces a bio-crude.

28. The process of claim 26 or 27 further comprising the step of subjecting the bio-oil to a hydrothermal treatment to form a diesel fuel.

29. The process of claim 27 wherein the bio-crude is subjected to a hydrocracking treatment to form a light diesel fuel.

30. The process of any one of claims 15 to 17 wherein the product of the second stage BCC is split into a first bio-crude fraction and a second bio-crude fraction.

31. The process of claim 30 wherein the first bio-crude fraction is subjected to a reforming step to form a third bio-crude fraction.

32. The process of claim 31 wherein the third bio-crude fraction is mixed with the second bio-crude fraction to form a fourth bio-crude fraction.

33. The process of claim 32 wherein the fourth bio-crude fraction is subjected to a hydrocracking step to form a light diesel fuel.

34. The process of any one of the preceding claims wherein CO₂ produced during the first stage BCC and the second stage BCC is collected.

35. The process of claim 34 wherein the CO₂ is used in growing biomass.

36. The process of any one of claims 21 to 28 wherein the reaction product of the BCC second stage is split into a water-soluble bio-crude, a C₈ to C₂₂ water-insoluble bio-crude, and a >C₂₂ bio-crude.
